# EUROPEAN PATENT APPLICATION

(11) **EP 4 601 103 A1**
(43) Date of publication of application: **13.08.2025**
(21) Application number: 23883976.5
(22) Date of filing: 10.01.2023
(51) Int. Cl.: H01M 50/477, H01M 50/244, H01M 50/35

(54) **ISOLATION PLATE, ISOLATION PLATE ASSEMBLY, BATTERY MODULE, BATTERY PACK, AND ELECTRIC DEVICE**

(30) Priority: 31.10.2022 CN 202222868503 U
(71) Applicant: Contemporary Amperex Technology (Hong Kong) Limited, Central, Hong Kong (HK)
(72) Inventor: CHEN, Yifeng, Ningde, Fujian 352100 (CN); WANG, Yongguang, Ningde, Fujian 352100 (CN); TIAN, Jiayu, Ningde, Fujian 352100 (CN); LIAO, Xiping, Ningde, Fujian 352100 (CN); CHEN, Guize, Ningde, Fujian 352100 (CN)
(74) Representative: Ziebig Hengelhaupt Intellectual Property Attorneys Patentanwaltskanzlei PartGmbB
(86) International application number: PCT/CN2023/071514
(87) International publication number: WO 2024/093026

(57) **Abstract**

The present application discloses a partition plate, a partition plate assembly, a battery module, a battery pack, and an electrical device, and belongs to the technical field of batteries. An partition plate of the present application is applied to a battery module, the partition plate including: a plurality of exhaust holes, a portion of the exhaust holes in the plurality of the exhaust holes having an exhaust direction provided along a first direction, and another portion of the exhaust holes in the plurality of the exhaust holes having an exhaust direction provided along a second direction, where the first direction and the second direction are provided at an included angle to the vertical direction, respectively, and the first direction and the second direction are provided at an included angle. The exhaust holes of the present application are provided at least toward the first direction and the second direction, and along a thickness direction of the partition plate body, which can avoid the risk of the top of the battery module or the battery pack bursting due to the difficult exhaust from the top, and thus can prevent the problem of the failure of the battery module or the battery pack from occurring.

## Description

### CROSS-REFERENCE TO RELATED APPLICATIONS

The present application claims priority to Chinese patent application 202222868503.3, filed on October 31, 2022, entitled "PARTITION PLATE, PARTITION PLATE ASSEMBLY, BATTERY MODULE, BATTERY PACK, AND ELECTRICAL DEVICE", which is incorporated herein by reference in its entirety.

### TECHNICAL FIELD

The present application relates to the technical field of batteries, and in particular, to a partition plate, a partition plate assembly, a battery module, a battery pack, and an electrical device.

### BACKGROUND

When a cell in a battery module or a battery pack has thermal runaway, an explosion-proof valve on the cell needs to be opened in time to exhaust the gas generated, and the current thermal runaway exhaust of the cell is likely to be untimely, resulting in the failure of the battery module or the battery pack.

### SUMMARY

In view of the above problems, the present application provides a partition plate, a partition plate assembly, a battery module, a battery pack, and an electrical device, which can change an exhaust path through an exhaust structure of the partition plate to prevent the occurrence of a problem that the failure of the battery module or the battery pack is easily caused during exhaust.

In a first aspect, the present application provides a partition plate for use in a battery module, the partition plate including:

a plurality of exhaust holes, a portion of the exhaust holes in the plurality of the exhaust holes having an exhaust direction provided along a first direction, and another portion of the exhaust holes in the plurality of the exhaust holes having an exhaust direction provided along a second direction, wherein the first direction and the second direction are provided at an included angle to the vertical direction, respectively, and the first direction and the second direction are provided at an included angle.

In the technical solution of an embodiment of the present application, the exhaust holes are provided at least toward the first direction and the second direction, which can avoid the risk of the top of the battery module or the battery pack bursting due to the difficult exhaust, and thus can prevent the problem of the failure of the battery module or the battery pack from occurring.

In some embodiments, the first direction is a length direction of the battery module and the second direction is a width direction of the battery module.

Therefore, the exhaust direction may be along the length direction and the width direction of the battery module, so that the gas can be quickly discharged into an internal space of the battery module and timely discharged to the outside of the battery module.

In some embodiments, the partition plate includes:
a partition plate body; and
an exhaust hood, the exhaust hood being provided on one side of a thickness direction of the partition plate body in a convex manner and connected to the partition plate body, an internal space of the exhaust hood forming an exhaust channel, along the thickness direction of the partition plate body, the exhaust channel passing through the partition plate body, and a plurality of exhaust holes being disposed on the exhaust hood.

The exhaust hood is provided on the partition plate body, which, on the one hand, increases a gas storage space and can avoid "trapped gas", and on the other hand, improves the overall rigidity of the partition plate.

In some embodiments, the exhaust hood is provided to be fixedly connected or integrally molded to the partition plate body.

It is possible to reliably connect the exhaust hood to the partition plate body.

In some embodiments, the exhaust hood has an elongate shape.

The exhaust hood has an elongate shape, which can further increase the rigidity of the partition plate and improve the bending resistance of the partition plate.

In some embodiments, the number of exhaust hoods is one, and a length direction of the exhaust hood is the same as the first direction.

The exhaust hood is provided with exhaust holes, which may increase the exhaust volume and realize rapid exhaust when the battery pack or the battery module fails thermally, reduce the risk of battery bursting, and also increase the overall rigidity of the partition plate.

In some embodiments, the number of exhaust hoods is plural, and the plurality of exhaust hoods is spaced apart along the first direction.

The number of exhaust hoods is plural, and each exhaust hood is provided with exhaust holes, which may increase the exhaust volume, realize rapid exhaust when the battery pack or the battery module fails thermally, reduce the risk of battery bursting, and also increase the overall rigidity of the partition plate.

In some embodiments, the top of the exhaust hood is provided with at least one exhaust hole, and the exhaust hole is constructed in such a manner that a jet direction of the exhaust hole is provided at an included angle to the vertical direction.

Therefore, gas discharged from the exhaust hole can be prevented from being sprayed directly onto a top cover of the battery module or the battery pack.

In a second aspect, the present application provides a partition plate assembly including the partition plate of the first aspect.

The partition plate assembly of the present application includes all of the technical features of the first aspect and has the same effect as described above, which will not be repeated herein.

In a third aspect, the present application provides a battery module having the partition plate assembly of the second aspect, the battery module including:
at least one battery cell, the battery cell being provided with a first air vent at the top of the battery cell; and the partition plate being disposed at the top of the at least one battery cell, and the exhaust hole communicating with the first air vent.

The battery module of the present application includes all of the technical features of the first aspect, and has the same effect as described above, which will be repeated herein.

In some embodiments, a pressure relief mechanism is also provided at the bottom of the battery cell.

The pressure relief mechanism is provided so that gas can be simultaneously exhausted from the top and the bottom when a cell assembly of the battery module is in thermal runaway, which makes it possible that the gas inside the cell assembly can be discharged in a timely manner, and the risk of bursting of the battery module or the battery pack can be further reduced.

In a fourth aspect, the present application provides a battery pack including:
a box; and
the battery module of the third aspect, the battery module being provided inside the box body.

The battery pack of the present application includes all of the technical features of the first aspect, and has the same effect as described above, which will be not repeated herein.

In some embodiments, a gap is provided between a side wall of the battery module and a side wall of the box body, the battery pack further includes a flow guide member, the flow guide member is provided between a bottom of the battery module and a bottom of the box body, the flow guide member is provided with a first flow guide port and a second flow guide port communicating with the first flow guide port, the second flow guide port communicates with the gap, and the first flow guide port is provided opposite a pressure relief mechanism of a battery cell.

The gas from the thermal runaway of a battery can be laterally exported from the bottom to the gap between the side wall of the box body and the side wall of the battery module, which accelerates the exhausting speed of the battery when the battery is in thermal runaway, avoids localized trapped gases, and further reduces the risk of bursting of the battery module/battery pack.

In some embodiments, the first flow guide port passes through the flow guide member along the thickness direction of the partition plate, and the second flow guide port is provided along the first direction.

The second flow guide port can better guide the gas discharged from the bottom of the battery module to the gap between the side wall of the box body and the side wall of the battery module, avoiding the problem of "trapped gas" caused by difficult gas exhaust at the bottom.

In a fifth aspect, the present application provides an electrical device including the battery module of the third aspect, the battery module being used for providing electrical energy; or including the battery pack of the fourth aspect, the battery pack being used for providing electrical energy.

The electrical device includes technical features of the above-mentioned battery module or the above-mentioned battery pack, and has the same effect as described above, which will not be repeated herein.

The foregoing description is merely an overview of the technical solutions of the present application. The following describes specific embodiments of the present application illustratively to enable a clearer understanding of the technical solutions of the present application, enable implementation of the technical solutions based on the content of the specification, and make the foregoing and other objectives, features, and advantages of the present application more evident and comprehensible.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not construed as a limitation on the present application. In addition, throughout the accompanying drawings, the same reference signs represent the same components. In the accompanying drawings:
FIG. 1 is a schematic diagram of an electrical device as a vehicle according to some embodiments of the present application;
FIG. 2 is a schematic exploded structural diagram of a battery pack according to some embodiments of the present application;
FIG. 3 is a schematic exploded structural diagram of a battery cell according to some embodiments of the present application;
FIG. 4 is an axonometric drawing of a partition plate according to some embodiments of the present application;
FIG. 5 is a local view of FIG. 4;
FIG. 6 is a schematic exploded structural diagram of a battery module according to some embodiments of the present application;
FIG. 7 is an axonometric drawing of a flow guide member according to some embodiments of the present application; and
FIG. 8 is a partially enlarged view at I of FIG. 7.

### List of reference numerals:

vehicle 1000;
battery pack 100;
battery pack shell 10, box body 11, upper cover 12;
battery cell 20, top cover assembly 21, electrode terminal 21a, shell 22, cell assembly 23, positive tab 23a, negative tab 23b, first air vent 23c;
partition plate 30, partition plate body 31, exhaust hood 32, exhaust hole 321, first direction B, second direction A, thickness direction C of partition plate body;
flow guide member 40, first flow guide port 41, second flow guide port 42;
controller 200;
motor 300.

### DETAILED DESCRIPTION OF EMBODIMENTS

Embodiments of the technical solution of the present application are described in detail below in conjunction with the accompanying drawings. The following embodiments are only used to more clearly illustrate the technical solution of the present application, and therefore, are merely examples and cannot be used to limit the protection scope of the present application.

Unless otherwise defined, all technical and scientific terms used herein bear the same meanings as what is normally understood by a person skilled in the technical field of the present application. The terms used herein are merely intended to describe specific embodiments but not to limit the present application. The terms "include" and "contain" and any variations thereof used in the specification, claims, and brief description of drawings of the present application are intended as non-exclusive inclusion.

In the description of the embodiments of the present application, the terms "first", "second", and the like are merely intended to distinguish between different objects, and shall not be understood as any indication or implication of relative importance or any implicit indication of the number, particular sequence or primary-secondary relationship of the technical features indicated. In the descriptions of the embodiments of the present application, "a plurality of" means two or more, unless otherwise specifically defined.

Reference to "embodiments" in this specification means that particular features, structures, or characteristics described with reference to the embodiments may be included in at least one embodiment of the present application. Occurrence of the phrase in various places in this specification does not necessarily refer to the same embodiment, nor is an independent or alternative embodiment that is mutually exclusive with other embodiments. It is understood explicitly and implicitly by a person skilled in the art that the embodiments described in this specification may be combined with other embodiments.

In the description of the embodiments of the present application, the term "and/or" describes only an association relationship between associated objects and represents that three relationships may exist. For example, A and/or B may represent the following three cases: only A exists, both A and B exist, and only B exists. In addition, the character "/" in this specification generally indicates an "or" relationship between the associated objects.

In the description of the embodiments of the present application, the term "a plurality of" refers to two or more (including two), similarly, "a plurality of groups" refers to two or more groups (including two groups), and "a plurality of pieces" refers to two or more pieces (including two pieces).

In the description of embodiments of the present application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of the present application, but not intended to indicate or imply that the indicated device or component is necessarily located in the specified direction or constructed or operated in the specified direction. Therefore, such terms are not to be understood as a limitation on embodiments of the present application.

In the descriptions of the embodiments of the present application, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. A person of ordinary skill in the art can understand specific meanings of these terms in the embodiments of the present application as appropriate to specific situations.

The applicant notes that when a cell of a battery is in thermal runaway, air is exhausted from the top, and with an exhaust hole set towards the top, and the gap between the exhaust hole and a top cover of a battery module or battery pack is small, which is prone to trap gas, and the gas impacts the top cover during exhaust, which may cause the battery to burst and cause the battery to fail.

In order to solve the above problems, the applicant has found that the direction of the exhaust holes can be changed so that the exhaust holes exhaust gas from a side surface, which can avoid the impact of the exhaust holes on the top cover of the battery module or the battery pack, and a plurality of exhaust holes in a plurality of directions can be provided on the partition plate in order to increase the exhaust speed, so that the gas can be discharged in a timely manner, and the phenomenon of "trapped gas" can be further avoided, so as to reduce the risk of battery bursting.

Embodiments of the present application provide an electrical device including a battery cell or a battery pack, the battery cell or the battery pack providing electrical energy to the electrical device. The electrical device may be, but is not limited to, a cell phone, a tablet, a laptop computer, an electric toy, a power tool, an electric vehicle, an electric car, a ship, a spacecraft, and the like. Among them, the electric toy may include a stationary or mobile electric toy, for example, a game console, an electric car toy, an electric boat toy, an electric airplane toy, and so on, and the spacecraft may include an airplane, a rocket, a space shuttle, a spaceship, and so on.

The following embodiments are illustrated, for convenience of illustration, with an example of a vehicle 1000 serving as an electrical device according to some embodiments of the present application.

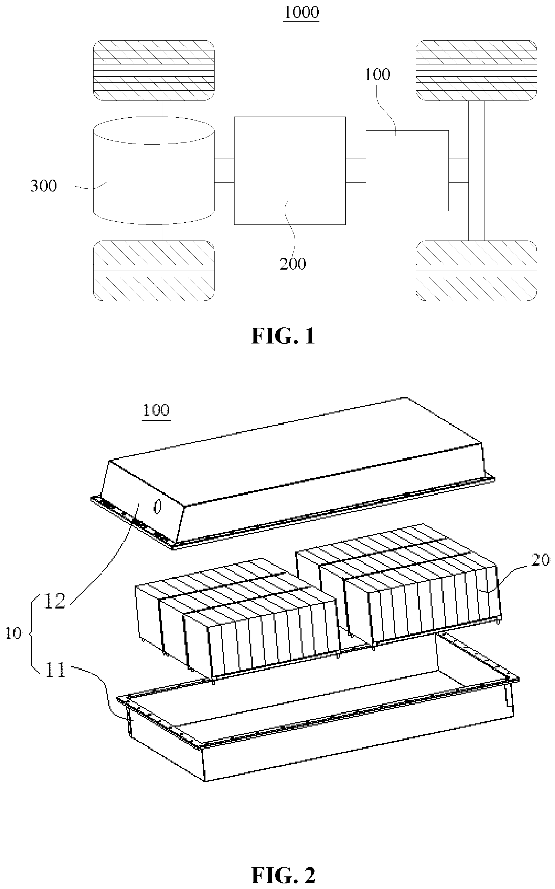

Referring to FIG. 1, FIG. 1 is a schematic structural diagram of a vehicle 1000 according to some embodiments of the present application. The vehicle 1000 may be a fuel vehicle, a gas vehicle or a new energy vehicle, and the new energy vehicle may be a pure electric vehicle, a hybrid vehicle or an extended-range electric vehicle and the like. The vehicle 1000 is provided with a battery pack 100 inside the vehicle 1000, and the battery pack 100 may be provided at the bottom or the head or the tail of the vehicle 1000. The battery pack 100 may be used for powering the vehicle 1000, for example, the battery pack 100 may be used as an operating power source for the vehicle 1000. The vehicle 1000 may also include a controller 200 and a motor 300, where the controller 200 is used to control the battery pack 100 to power the motor 300, for example, for operational power requirements for starting, navigating, and driving the vehicle 1000.

In some embodiments of the present application, the battery pack 100 serves not only as an operating power supply of the vehicle 1000, but may also serve as a drive power supply of the vehicle 1000 to provide driving power for the vehicle 1000 in place of or partially in place of oil or natural gas.

Referring to FIG. 2, FIG. 2 is a schematic exploded structural diagram of a battery pack 100 according to some embodiments of the present application. The battery pack 100 includes a battery pack shell 10 and at least one battery cell 20, the battery cell 20 being accommodated within the battery pack shell 10. Here, the battery pack shell 10 is used to provide an accommodation space for the battery cell 20, and the battery pack shell 10 may be of a variety of structures. In some embodiments, the battery pack shell 10 may include a box body 11 and an upper cover 12, the box body 11 and the upper cover 12 cover each other, and the box body 11 and the upper cover 12 together define an accommodation space for accommodating the battery cell 20. The upper cover 12 may be of a hollow structure with an inlet port at one end, the box body 11 may be of a plate-like structure, and the box body 11 is capped on the inlet port side of the upper cover 12, so that the box body 11 and the upper cover 12 together define the accommodation space; the box body 11 and the upper cover 12 may both be of a hollow structure with an inlet port at one side, and the inlet port side of the box body 11 is capped on the inlet port side of the upper cover 12. Of course, the box body 11 formed by the box body 11 and the upper cover 12 may be of various shapes, for example, a T-shape, a rectangular body, and the like.

In the battery pack 100, there may be a plurality of battery cells 20. The plurality of battery cells 20 may be connected in series or in parallel or in parallel and series, and "connected in parallel and series" means that there are both series and parallel connections in the plurality of battery cells 20. The plurality of battery cells 20 may be directly connected in series, in parallel, or in parallel and series, and then a whole formed by the plurality of battery cells 20 is accommodated in the box body 11. Certainly, in the battery pack 100, the plurality of battery cells 20 may first be connected in series or in parallel or in parallel and series to form battery modules, and then a plurality of battery modules are connected in series or in parallel or in parallel and series to form a whole that is accommodated in the box body 11. The battery pack 100 may also include other structures, for example, the battery pack 100 may also include a busbar component used for realizing an electrical connection between the plurality of battery cells 20.

Each battery cell 20 may be a secondary battery or a primary battery, and may also be a lithium-sulfur battery, a sodium-ion battery, or a magnesium-ion battery, but is not limited thereto. The battery cells 20 may be cylindrical, flat, rectangular, or other shapes, etc.

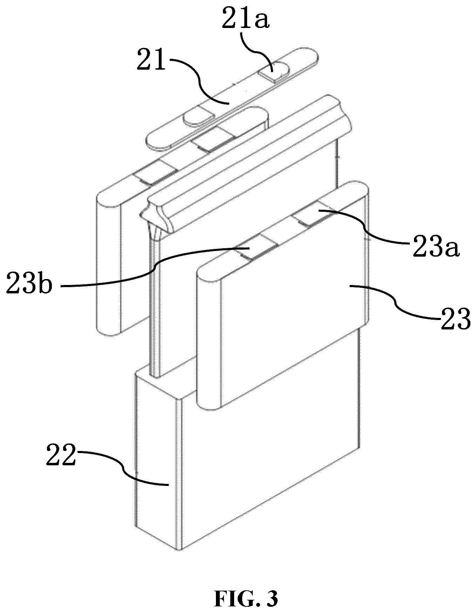

Referring to FIG. 3, FIG. 3 is a schematic exploded structural diagram of a battery cell 20 according to some embodiments of the present application. The battery cell 20 is the smallest unit that makes up a battery pack. The battery cell 20 includes a top cover assembly 21, a shell 22, a cell assembly 23, and other functional components.

The top cover assembly 21 is a component that caps on the inlet port of the shell 22 to insulate the internal environment of the battery cell 20 from the external environment. Without limitation, the shape of the top cover assembly 21 may be adapted to the shape of the housing 22 to match the housing 22. Optionally, the top cover assembly 21 may be made of a material (e.g., an aluminum alloy) having a certain degree of hardness and strength, so that the top cover assembly 21 is less likely to deform when subjected to an extrusion and collision, so that the battery cell 20 can have a higher structural strength, and have an improved safety performance. The top cover assembly 21 may be provided with functional components such as an electrode terminal 21a. The electrode terminal 21a may be used to be electrically connected to the cell assembly 23 for outputting or inputting electrical energy from the battery cell 20. In some embodiments, the top cover assembly 21 may also be provided with a pressure relief mechanism for relieving the internal pressure of the battery cell 20 when the internal pressure or temperature of the battery cell 20 reaches a threshold value. The top cover assembly 21 may also be made of a variety of materials, for example, copper, iron, aluminum, stainless steel, aluminum alloy, plastic, etc., and the embodiments of the present application do not impose any special limitations thereon. In some embodiments, an insulator may also be provided on the inner side of the top cover assembly 21, and the insulator may be used to isolate electrically connected components within the housing 22 from the top cover assembly 21 to reduce the risk of a short circuit. Exemplarily, the insulator may be plastic, rubber, etc.

The shell 22 is a component for cooperating with the top cover assembly 21 to form an internal environment of the battery cell 20, where the formed internal environment may be used to accommodate the cell assembly 23, an electrolyte solution, and other components. The housing 22 and the top cover assembly 21 may be separate components, and an inlet port may be provided in the housing 22, with the top cover assembly 21 capping on the inlet port to form the internal environment of the battery cell 20. Without limitation, it is also possible to integrate the top cover assembly 21 and the housing 22. Specifically, the top cover assembly 21 and the housing 22 may form a common connecting face before other components are put in the housing, and then the top cover assembly 21 can be made to cap on the housing 22 when it is necessary to encapsulate the interior of the housing 22. The housing 22 may be of a variety of shapes and of a variety of sizes, such as rectangular shaped, cylindrical shaped, hexagonal prism shaped, and the like. Specifically, the shape of the housing 22 may be determined based on the specific shape and size of the cell assembly 23. The material of the housing 22 may be various, for example, copper, iron, aluminum, stainless steel, aluminum alloy, plastic, etc., and the embodiments of the present application do not impose any special limitations thereon.

The cell assembly 23 is the component in the battery cell 20 in which the electrochemical reaction occurs. The shell 22 may contain one or more cell assemblies 23. The cell assembly 23 is mainly formed by coiling or stacking a positive electrode plate and a negative electrode plate, and a separator is usually provided between the positive electrode plate and the negative electrode plate. The portions of the positive electrode plate and the negative electrode plate having active materials form a main body portion of the cell assembly, and the portions of the positive electrode plate and the negative electrode plate not having an active material each form a tab. A positive tab 23a and a negative tab 23b may be located together at one end of the main body portion or at two ends of the main body portion respectively. During charging and discharging of the battery, a positive active material and a negative active material react with the electrolyte solution, and the tabs are connected to electrode terminals to form a current circuit.

The following embodiments are illustrated, for convenience of illustration, with an example of a partition plate 30 according to some embodiments of the present application.

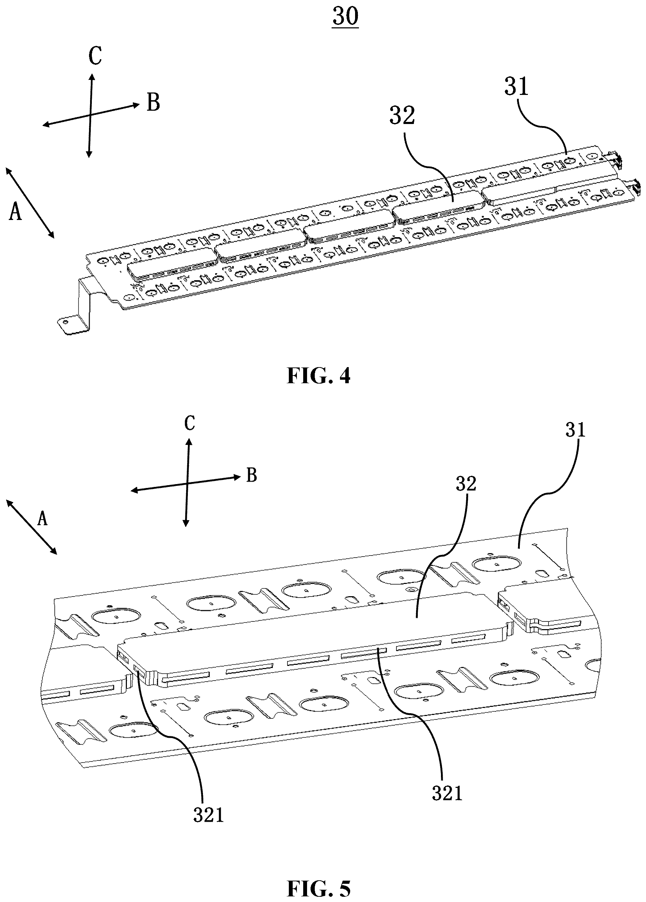

Referring to FIGS. 4 and 5, a partition plate 30 of the present application includes a plurality of exhaust holes 321, a portion of the exhaust holes 321 in the plurality of exhaust holes 321 having an exhaust direction provided along a first direction B, and another portion of the exhaust holes in the plurality of exhaust holes 321 having an exhaust direction provided along a second direction A, where the first direction B and the second direction A are provided at an included angle to the vertical direction, respectively, and the first direction B and the second direction A are provided at an included angle.

It is appreciated that the vertical direction in the present application is a thickness direction of the partition plate 30.

The first direction B may or may not be perpendicular to the second direction A, which is not specifically limited herein.

The first direction B and the second direction A are each provided at an included angle to the vertical direction, meaning that neither the first direction B nor the second direction A coincides with the vertical direction.

The first direction B and the second direction A are provided at an included angle to each other, meaning that the first direction B and the second direction A do not coincide.

FIG. 4 to FIG. 7 illustrate the first direction B, the second direction A, and the thickness direction C of a partition plate body.

The exhaust holes 321 are provided at least toward the first direction B and the second direction A, which can avoid the risk of the top of the battery module or the battery pack bursting due to the difficult exhaust from the top, and thus can prevent the problem of the failure of the battery module or the battery pack from occurring.

In some embodiments, the first direction B is a length direction of the battery module and the second direction A is a width direction of the battery module.

Therefore, the exhaust direction may be along the length direction and the width direction of the battery module, so that the gas can be quickly discharged into the internal space of the battery module and discharged in a timely manner.

In some embodiments, the partition plate includes a partition plate body 31 and an exhaust hood 32. The exhaust hood 32 is provided on one side of the thickness direction C of the partition plate body in a convex manner and connected to the partition plate body 31, an internal space of the exhaust hood 32 forms an exhaust channel, along the thickness direction C of the partition plate body, the exhaust channel passes through the partition plate body 31, and a plurality of exhaust holes 321 are disposed on the exhaust hood 32.

The shape of the exhaust hood 32 may be, but is not limited to, square, round, trapezoidal, etc., which may be specifically set according to actual needs.

The exhaust hood 32 is connected to the partition plate body 31, meaning that the exhaust hood 32 is fixed relative to the partition plate body 31 and cannot move.

Exemplarily, the exhaust holes 321 are provided on a side surface of the exhaust hood 32, while the exhaust holes 321 are not provided on the top surface of the exhaust hood 32, and the exhaust holes 321 are provided at least toward the first direction B and the second direction A, and the first direction B and the second direction A may be perpendicular or not perpendicular to the thickness direction C of the partition plate body.

Exemplarily, the exhaust holes 321 are provided on the top surface of the exhaust hood 32, and the exhaust holes 321 are plural in number and provided at least toward the first direction B and the second direction A, and the first direction B and the second direction A are perpendicular to the thickness direction C of the partition plate body.

Exemplarily, the exhaust holes 321 are provided on a top surface and a side surface of the exhaust hood 32, the exhaust holes 321 are provided at least toward the first direction B and the second direction A, the orientation of the exhaust holes 321 on the top surface is perpendicular to the thickness direction C of the partition plate body, and the orientation of the exhaust holes 321 on the side surface may or may not be perpendicular to the thickness direction C of the partition plate body.

The exhaust hood 32 is set on the partition plate body 31, which, on the one hand, increases the gas storage space and can avoid "trapped gas", and on the other hand, improves the overall rigidity of the partition plate 30.

In some embodiments, the exhaust hood 32 is detachably connected or integrally molded to the partition plate body 31.

The detachable connection of the exhaust hood 32 to the partition plate body 31 may be, but is not limited to, screw connections, riveted connections, heat fusion welding, snap connections, etc.

Integral molding of the exhaust hood 32 with the partition plate body 31 may be, but is not limited to, hot press molding, one-piece injection molding, and the like.

The exhaust hood 32 and the partition plate body 31 can be detachably connected or integrally molded, which allows the exhaust hood 32 and the partition plate body 31 to be reliably connected together.

In some embodiments, referring to FIGS. 4 and 5, the exhaust hood 32 has an elongate shape.

Exemplarily, the partition plate body 31 has an elongate shape, and the length direction of the partition plate body 31 is the same as the length direction of the exhaust hood 32, and the partition plate body 31 may be of other shapes, which is not specifically limited herein.

The exhaust hood 32 has an elongate shape, which can further increase the rigidity of the partition plate 30 and improve the bending resistance of the partition plate 30.

In some embodiments, the number of exhaust hoods 32 is one, and the length direction of the exhaust hood 32 is the same as the first direction B.

The number of exhaust hoods 32 may be one, and the exhaust hood 32 is provided with exhaust holes 321, which may increase the exhaust volume, realize rapid exhaust when the battery pack or the battery module fails thermally, reduce the risk of battery bursting, and also increase the overall rigidity of the partition plate 30.

In some embodiments, the number of exhaust hoods 32 is plural, and the plurality of exhaust hoods 32 are spaced apart along the first direction B.

The number of exhaust hoods 32 is plural, and each exhaust hood 32 is provided with an exhaust hole, which can increase the exhaust volume, realize rapid exhaust when the battery pack or the battery module fails thermally, reduce the risk of battery bursting, and also increase the overall rigidity of the partition plate 30.

In some embodiments, the top of the exhaust hood 32 is provided with at least one exhaust hole 321, and the exhaust hole 321 is constructed in such a manner that a jet direction of the exhaust hole 321 is provided at an included angle to the vertical direction.

The top of the exhaust hood 32 refers to a side surface of the exhaust hood 32 away from the partition plate body 31 along the thickness direction C of the partition plate body.

Gas discharged from the exhaust hole 321 can be prevented from being sprayed directly onto a top cover of the battery module or the battery pack.

The following embodiments are illustrated, for convenience of illustration, with an example of a partition plate assembly according to some embodiments of the present application.

The partition plate assembly of the present application includes the partition plate 30 described above.

Specifically and optionally, the partition plate assembly further includes busbars, and circuit boards, and the partition plate is provided with a plurality of spaced-apart busbar mounting positions and the circuit boards, with a busbar being mounted on each busbar mounting position. The busbars are used to electrically connect two adjacent battery cells.

The partition plate assembly of the present application includes all of the technical features of the partition plate described above, and has the same effect as described above which will be repeated herein.

The following embodiments are illustrated, for convenience of illustration, with an example of a battery module according to some embodiments of the present application.

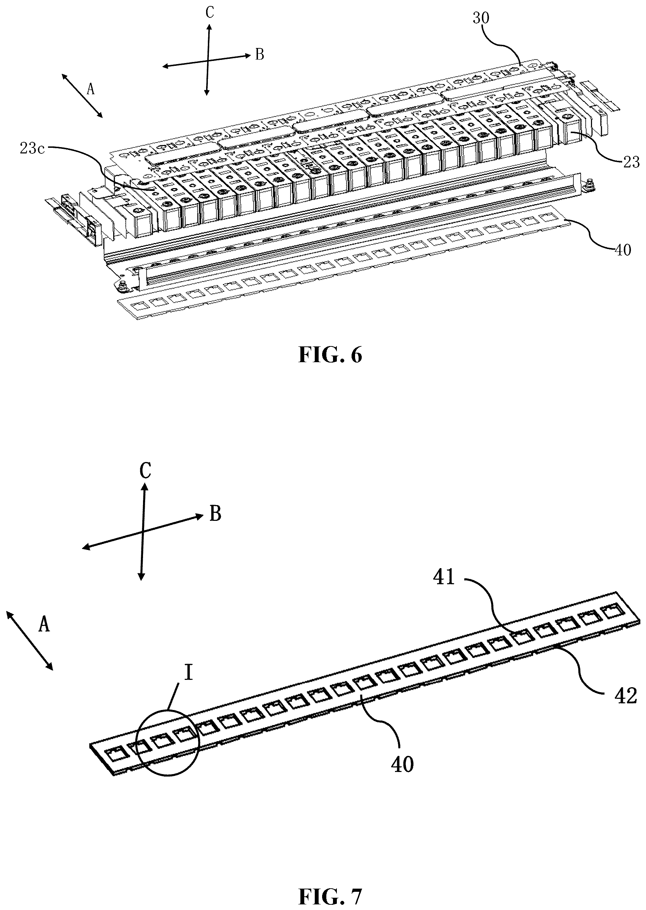

Referring to FIG. 6, the battery module of the present application includes at least one battery cell and the above-described partition plate 30. The battery cell is provided with a first air vent 23c at the top of the battery cell, the partition plate 30 is disposed at the top of the at least one battery cell, and the exhaust hole 321 communicates with the first air vent 23c.

A first pressure relief mechanism is provided in the first air vent 23c, and the first pressure relief mechanism may be an explosion-proof valve or a temperature sensitive top cover.

When a cell in the battery cell 20 is in thermal runaway, the gas in the battery cell 20 is discharged through the first air vent 23c and an exhaust port in turn, and the exhaust port is set so that the gas is not blown directly to the top cover of the battery module (at present, the exhaust port directly faces the top cover, and the gap between the top cover and the exhaust port is small, which does not make it easy for the gas to be discharged in a timely manner, and the phenomenon of "trapped gas" occurs).

In some embodiments, a pressure relief mechanism is also provided at the bottom of the battery cell 20.

The pressure relief mechanism may be, but is not limited to, an explosion-proof valve.

The pressure relief mechanism is provided so that gas can be simultaneously exhausted from the top and the bottom when the cell assembly of the battery module is in thermal runaway, which makes it possible that the gas inside the cell assembly can be discharged in a timely manner, and the risk of bursting of the battery module or the battery pack can be further reduced.

The following embodiments are illustrated, for convenience of illustration, with an example of a battery pack according to some embodiments of the present application.

Referring to FIG. 6, the battery pack of the present application includes a box body (not shown in the figure) and the battery module described above, the battery module being disposed within the box body.

The battery pack of the present application includes all of the technical features of the battery module described above, and has the same effect as described above, which will be repeated herein.

In some embodiments, a gap is provided between a side wall of the battery module and a side wall of the box body, and the battery pack further includes a flow guide member 40, the flow guide member 40 is provided between a bottom of the battery module and a bottom of the box body, the flow guide member 40 is provided with a first flow guide port 41 and a second flow guide port 42 communicating with the first flow guide port 41, the second flow guide port 42 communicates with the gap, and the first flow guide port 41 is provided opposite the pressure relief mechanism of the battery cell 20.

The gas from the thermal runaway of the battery can be laterally exported from the bottom to the gap between the side wall of the box body and the side wall of the battery module, which accelerates the exhausting speed of the battery when the battery is in thermal runaway, avoids localized trapped gases, and further reduces the risk bursting of the module/battery pack.

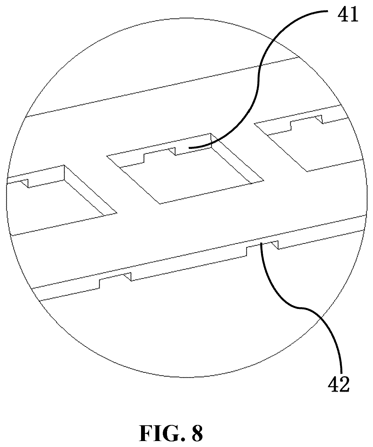

In some embodiments, referring to FIG. 6 to FIG. 8, the first flow guide port 41 passes through the flow guide member 40 along the thickness direction of the partition plate 30, and the second flow guide port 42 is provided along the first direction B.

The thickness direction of the partition plate 30 is the same as the thickness direction C of the partition plate body.

Specifically and optionally, the flow guide member 40 may be of an elongate structure, and when the number of cell assemblies 23 is plural, the length direction of the flow guide member 40 is the same as the arrangement direction of the cell assemblies 23.

Optionally, the second flow guide port 42 may be of a notch structure, the notch facing the side of the second direction A.

The flow guide member 40 can better guide the gas discharged from the bottom of the battery module to the gap between the side wall of the box body and the side wall of the battery module, avoiding the problem of "trapped gas" caused by difficult gas exhaust at the bottom.

The following embodiments are illustrated, for convenience of illustration, with an example of a partition plate 30 according to some embodiments of the present application.

Referring to FIG. 4 to FIG. 8, a partition plate 30 of the present application includes a plurality of exhaust holes 321, a portion of the exhaust holes 321 in the plurality of exhaust holes 321 having an exhaust direction provided along a first direction B, and another portion of the exhaust holes in the plurality of exhaust holes 321 having an exhaust direction provided along a second direction A, where the first direction B and the second direction A are provided at an included angle to the vertical direction, respectively, and the first direction B and the second direction A are provided at an included angle.

The first direction B is a length direction of the battery module and the second direction A is a width direction of the battery module.

The partition plate includes a partition plate body 31 and an exhaust hood 32. The exhaust hood 32 is provided on one side of the thickness direction of the partition plate body in a convex manner and connected to the partition plate body 31, an internal space of the exhaust hood 32 forms an exhaust channel, along the thickness direction of the partition plate body, the exhaust channel passes through the partition plate body 31, and the plurality of exhaust holes 321 are disposed on the exhaust hood 32.

The exhaust hood 32 is detachably connected or integrally molded to the partition plate body 31.

Optionally, the number of exhaust hoods 32 is one, and the length direction of the exhaust hood 32 is the same as the first direction B.

Optionally, the number of exhaust hoods 32 is plural, and the plurality of exhaust hoods 32 are spaced apart along the first direction B.

Optionally, the top of the exhaust hood 32 is provided with at least one exhaust hole 321, and the exhaust hole 321 is constructed in such a manner that a jet direction of the exhaust hole 321 is provided at an included angle to the vertical direction.

In conclusion, it should be noted that the foregoing embodiments are merely for describing the technical solutions of the present application rather than for limiting the present application. Although the present application has been described in detail with reference to the foregoing embodiments, a person of ordinary skill in the art should appreciate that they can still make modifications to the technical solutions described in the foregoing embodiments or make equivalent replacements to some or all technical features thereof. However, these modifications or replacements do not cause the essence of the corresponding technical solutions to depart from the scope of the technical solutions of the embodiments of the present application, and shall all fall within the scope of the claims and specification of the present application. In particular, as long as there is no structural conflict, the various technical features mentioned in the embodiments can be combined in any manner. The present application is not limited to the specific embodiments disclosed in this specification but includes all technical solutions falling within the scope of the claims.

## Claims

1. A partition plate, applied to a battery module, **characterized in that** the partition plate comprises:
a plurality of exhaust holes, a portion of the exhaust holes in the plurality of the exhaust holes having an exhaust direction provided along a first direction, and another portion of the exhaust holes in the plurality of the exhaust holes having an exhaust direction provided along a second direction, wherein the first direction and the second direction are provided at an included angle to the vertical direction, respectively, and the first direction and the second direction are provided at an included angle.

2. The partition plate according to claim 1, **characterized in that** the first direction is a length direction of the battery module and the second direction is a width direction of the battery module.

3. The partition plate according to claim 1 or 2, **characterized in that** the partition plate comprises:
a partition plate body; and
an exhaust hood, the exhaust hood being provided on one side of a thickness direction of the partition plate body in a convex manner and connected to the partition plate body, an internal space of the exhaust hood forming an exhaust channel, along the thickness direction of the partition plate body, the exhaust channel passing through the partition plate body, and the plurality of exhaust holes being disposed on the exhaust hood.

4. The partition plate according to claim 3, **characterized in that** the exhaust hood is provided to be fixedly connected or integrally molded to the partition plate body.

5. The partition plate according to claim 3 or 4, **characterized in that** the exhaust hood has an elongated shape.

6. The partition plate according to claim 5, **characterized in that** one exhaust hood is provided, and a length direction of the exhaust hood is the same as the first direction.

7. The partition plate according to claim 5, **characterized in that** a plurality of exhaust hoods are provided, and the plurality of the exhaust hoods are spaced apart along the first direction.

8. The partition plate according to any one of claims 3 to 7, **characterized in that** a top of the exhaust hood is provided with at least one exhaust hole, and the exhaust hole is constructed in such a manner that a jet direction of the exhaust hole is provided at an included angle to a vertical direction.

9. A partition plate assembly, **characterized in that** the partition plate assembly comprises the partition plate according to any one of claims 1 to 8.

10. A battery module, **characterized in that** the battery module comprises the partition plate assembly according to claim 9, and the battery module comprises:
at least one battery cell, the battery cell being provided with a first air vent at a top of the battery cell; and the partition plate being disposed at a top of the at least one battery cell, and the exhaust hole communicating with the first air vent.

11. The battery module according to claim 10, **characterized in that** a pressure relief mechanism is also provided at a bottom of the battery cell.

12. A battery pack, comprising:
a box; and
the battery module according to claim 11, the battery module being disposed within the box body.

13. The battery pack according to claim 12, **characterized in that** a gap is provided between a side wall of the battery module and a side wall of the box body, the battery pack further comprises a flow guide member, the flow guide member is provided between a bottom of the battery module and a bottom of the box body, the flow guide member is provided with a first flow guide port and a second flow guide port communicating with the first flow guide port, the second flow guide port communicates with the gap, and the first flow guide port is provided opposite a pressure relief mechanism of the battery cell.

14. The battery pack according to claim 13, **characterized in that** the first flow guide port passes through the flow guide member along a thickness direction of the partition plate, and the second flow guide port is provided along the first direction.

15. An electrical device, **characterized in that** the electrical device comprises the battery module according to claim 10 or claim 11, the battery module being used to provide electrical energy; or comprises the battery pack according to any one of claims 12 to 14, the battery pack being used to provide electrical energy.
